# EUROPÄISCHE PATENTANMELDUNG

(11) **EP 1 155 998 A1**
(43) Veröffentlichungstag der Anmeldung: **21.11.2001**
(21) Anmeldenummer: 00110439.7
(22) Anmeldetag: 16.05.2000
(51) Int. Cl.: B65H 31/24, B65H 29/18, B65G 57/11, B65G 21/14, H01M 10/04, B65H 29/36

(54) **Verfahren und Vorrichtung zum Stapeln von Platten**

(71) Anmelder: Albin Spitzke KG (GmbH & Co.), 22041 Hamburg (DE)
(72) Erfinder: Spitzke, Wolfgang, 22885 Barsbüttel (DE)
(74) Vertreter: Glawe, Delfs, Moll & Partner

(57) **Zusammenfassung**

Verfahren und Vorrichtung zum Stapeln von insbesondere stoß- oder biegeempfindlichen Platten mittels eines Plattenstaplers. Die Höhendifferenz (20) zwischen einem die Platten (2) heranführenden Förderer (1) und der Stapeloberseite (8) wird so eingestellt, daß die Platten (1) auf die Stapeloberseite (8) aufgleiten, während sie noch von dem Förderer (1) gestützt sind. Statt dessen könne sie auch frei fallen, sofern die Höhendifferenz (20) auf ein Betrag eingestellt wird, der geringer als ein Zwanzigstel der kleinsten Flächenabmessung der Platten (1) ist. Um trotz dieser Vorgaben einen Verzögerungsarmen Stapelwechsel vollziehen zu können, sind zwei Stapeltische (45) hintereinander angeordnet. Der dem Förderer (1) nähere Stapeltisch (4) greift mit kammartigen Stützen (26) zwischen versetzt angeordnete Zungen, die das Ende des Förderers (1) bilden.

## Beschreibung

In Geräten zum Stapeln von Akkumulatorplatten ist es bekannt (DE-A 27 05 509), die zu stapelnden Platten einzeln hintereinander auf einem horizontalen Förderband einem Stapeltisch zuzuführen. Die vom Ende des Förderbands abgeworfenen Platten prallen mit der vorlaufenden Kante gegen einen Anschlag und fallen dann auf den Stapeltisch beziehungsweise auf die Oberseite des darauf gebildeten Stapels. Der Stapeltisch wird entsprechend der wachsenden Stapelhöhe abgesenkt, um die Fallhöhe mäßig zu halten. Dennoch kommt es mitunter zu Plattenschäden, die auf den Anprall am Anschlag oder an der Stapeloberseite zurückzuführen sind. Das gilt um so mehr, als für die Herstellung von Akkumulatoren immer dünnere und weichere Platten eingesetzt werden, die sich leicht verbiegen. Dies setzt auch der wünschenswerten Steigerung der Stapelgeschwindigkeit Grenzen.

Der Erfindung liegt die Aufgabe zugrunde, die Wahrscheinlichkeit von Plattenschäden zu verringern und eine höhere Stapelgeschwindigkeit zu ermöglichen. Die erfindungsgemäße Lösung liegt in den Merkmalen der Ansprüche 1 und 4 sowie vorzugsweise denen der Unteransprüche.

Demnach ist vorgesehen, daß die Platten auf die Stapeloberseite nicht im freien Fall gelangen sondern auf sie aufgleiten, solange sie noch von dem Förderer gestützt sind. Dadurch werden Verkantungen vermieden, die bei freiem Fall vorkommen und zu Beschädigung, insbesondere zum Verbiegen, der Platte führen können. Außerdem werden die aufgleitenden Platten durch die Reibung abgebremst, so das der Stoß am Anschlag, falls ein solcher überhaupt noch erforderlich ist, verringert wird.

Das Ziel der Erfindung kann auch dadurch erreicht werden, daß die Höhendifferenz zwischen der Stapeloberseite und dem Ende des Förderers, gemessen lotrecht zur Förderrichtung, geringer als ein Zwanzigstel der kleineren Abmessung der Flächenausdehnung der Platte (Länge oder Breite) ist. Vorzugsweise ist sie sogar geringer als ein Fünfzigstel dieser Abmessung. Dadurch wird erreicht, daß sich ein flächig ausgebreitetes Luftkissen zwischen der Platte und der Stapeloberseite bildet, während die Platte sich in einer etwa parallelen Lage zur Stapeloberseite befindet. Die Verdrängung dieses Luftkissens führt dazu, daß sich die Platte sanft auf die Stapeloberseite senkt. Das gilt nicht nur in dem vorerwähntem Fall, in welchem die noch vom Förderer gestützte Platte mit ihrer voraufgehenden Kante die Stapeloberseite bereits erreicht hat und darauf aufgleitet, sondern auch dann, wenn bei der hoher Zufuhrgeschwindigkeit die Platte nach dem Verlassen des Förderers die Stapeloberseite noch nicht erreicht haben sollte. Das Luftkissen sorgt nämlich dafür, daß die Platte sich auch dann gleichmäßig und sanft auf die Stapeloberseite senkt, wenn sie frei darauf fällt. Dies ist grundsätzlich anders als bei dem bekannten Fall aus größerer Höhendistanz, weil bei diesem sich kein dämpfendes Luftkissen bilden kann, bevor bei einer sich verkantenden Platte deren Ecke oder Kante auf den Plattenstapel trifft. Durch die Erfindung wird also nicht nur die kinetische Auftreffenergie entsprechend der geringeren Fallhöhe verringert, sondern es wird gezielt der Luftkisseneffekt genutzt, der bislang (unbeobachtet) nur dann eintreten konnte, wenn sich eine Platte zufällig parallel auf die Stapeloberseite senkte, nicht aber bei einer sich während ihres Falls schräg stellenden Platte.

Wenn man die Platten auf die Stapeloberseite aufgleiten läßt, sollte der Winkel, unter welchem die Platte mit ihrer Vorderkante auf die Stapeloberseite trifft, geringer als 5 Grad, vorzugsweise geringer als 2 Grad sein.

Eine Vorrichtung zur Durchführung des Verfahrens sollte so eingerichtet sein, daß sie diese Verfahrensvoraussetzungen ermöglicht. Problematisch ist dies insbesondere dann, wenn ein auf die vorgesehene Höhe gewachsener Stapel abgeführt und durch einen leeren Stapeltisch ersetzt werden soll. Der Zeitbedarf eines solchen Stapelwechsels ist größer als die Zeitdifferenz zwischen der Ankunft zweier der aufeinander folgender Platten. Da man die Plattenzufuhr nicht bei jedem Stapelwechsel unterbrechen will, hat man bislang während der Stapelwechsels einen Hilfstisch zwischen den abzuführenden Stapel und das Ende des Förderbandes geschoben, der die während des Wechsels ankommenden Platten aufnimmt und anschließend auf den entleerten Stapeltisch umsetzt. Dies ist aber nicht ohne Inkaufnahme einer beträchtlichen Höhendifferenz zwischen der Stapeloberseite und dem Niveau der Förderers möglich.

Die Erfindung vermeidet oder mindert diese Problem dadurch, daß zwei Stapeltische in Richtung des Förderers hintereinander angeordnet und im Wechsel an den Förderer anschließbar sind. Sobald der Stapel auf einem Stapeltisch die angestrebte Höhe erreicht hat, geht der Fördervorgang auf den anderen Stapeltisch über. Damit dies möglich ist, wird das Ende des Förderers zweckmäßigerweise derart beweglich ausgebildet, daß es wechselnd an die Stapeltische angeschlossen ist. Der Übergang von dem dem Förder näheren Stapeltisch zu dem Ferneren ist dabei unproblematisch, weil die Verlängerung des Förderbands den Abwurf der nächstfolgenden Platte verzögert, wodurch hinreichende Zeit für den Anschlußwechsel zur Verfügung gestellt wird. Der umgekehrte Effekt beim Übergang von dem dem Förderer ferneren Stapeltisch auf den näheren bewirkt, daß beim Ankommen der Letzten, auf dem ferneren Tisch zu stapelnden Platte die folgende Platte den näheren Stapeltisch bereits etwa erreicht hat. Damit trotzdem der Förderer nicht oder nur kurz angehalten oder verzögert werden muß, wird er erfindungsgemäß von einer oder mehreren parallel angeordneten Zungen gebildet und besteht der ihm der nähere Stapeltisch aus einem oder mehren jeweils versetzt zu den Zungen des Förderers angeordnete Stützen. Die Zungen des Förderers können zwischen den Stützen des Tisches hindurch greifen. Daher kann der dem Förderer nähere Tisch seine Stapelhöhe bereits dann einnehmen, wenn der Förderer noch an den ferneren Stapeltisch angeschlossen ist. Ein ein- und ausschaltbarer Stopper sorgt dann dafür, daß die auf dem näheren Stapeltisch abzulegende Platte während des Anschlußwechsels über diesem Stapeltisch festgehalten wird. So kann während der Umstellung des Förderers von dem ferneren auf den näheren Stapeltisch wenigstens eine Platte auf dem näheren Stapeltisch schon wenigstens teilweise abgelegt werden, und es wird eine Anordnung ermöglicht, bei der der Abstand der Platten auf dem Förderer nicht kleiner ist als der Abstand der Stapel auf den beiden Stapeltischen.

Die Erfindung wird im folgenden näher unter Bezugnahme auf die Zeichnung erläutert, die ein vorteilhaftes Ausführungsbeispiel veranschaulicht. Es zeigen:
- Fig.1: eine schematische Seitenansicht,
- Fig.2: einen schematischen Querschnitt durch den dem Förderer näheren Stapeltisch.

Ein Förderband 1 trägt zu stapelnde Platten 2 in Pfeilrichtung 3 etwa horizontal einem von zwei Stapeltischen 4,5 zu, deren Höhe dadurch veränderbar ist, daß sie jeweils auf einem beispielsweise elektrisch oder hydraulisch betriebenen Hubzylinder 6 angeordnet sind. Jeweils über ihnen befindet sich ein Sensor 7, der mittels eines durch Pfeil angedeuteten Abtaststrahls die Höhe der Stapeloberfläche 8 abtastet. Die Stapeloberfläche wird entweder von dem leeren Stapeltisch oder von der Oberseite des darauf befindlichen Plattenstapels 9 gebildet. An den Sensor 7 ist eine Steuer- oder Regeleinrichtung angeschlossen, durch die der Hubzylinder 6 in solcher weise betätigt wird, daß die Stapeloberseite 8 sich ständig in einem vorbestimmten, geringen Höhenabstand 20 unterhalb des Niveaus des Förderers 1 befindet. Bei jedem Stapeltisch 4,5 befindet sich eine Rollenbahn 10 zum Abfördern der fertigen Stapel. Jeder Stapeltisch 4,5 wird von einer Mehrzahl kammartig von einer Tragplatte 25 parallel hochstehender Wände 26 gebildet. Zwischen diesen befinden sich die Rollen 10 der Abförderbahn. Sobald ein Stapel die vorgesehene Höhe erreicht hat und abgefördert werden soll, wird der zugehörige Stapeltisch unter das Niveau der Rollen 10 gesenkt. Der Stapel ruht dann auf den Rollen 10 und wird durch diese seitlich abgefördert.

In Förderrichtung 3 hinter jedem Stapeltisch befindet sich auf dem Stapelniveau ein Stopper 11,12 der vorzugsweise nachgiebig ist, um den Stoß auf die jeweils abgebremste Platte gering zu halten. Der zum Stapeltisch 4 gehörige Stopper 11 ist höhenverstellbar an einem Halter 13 angeordnet, der ihn aus der gezeigten, aktiven Stellung anheben kann in eine inaktive Stellung, in welcher der Durchgang für die zu stapelnden Platten zum Stapeltisch 5 frei ist.

Neben und/oder vor und/oder hinter jedem Stapeltisch können zum übereinstimmenden Ausrichten der Platten Ausrichteinrichtungen angeordnet sein, die bei 14 und 15 angedeutet sind und keiner näheren Beschreibung bedürfen, weil sie bekannt sind.

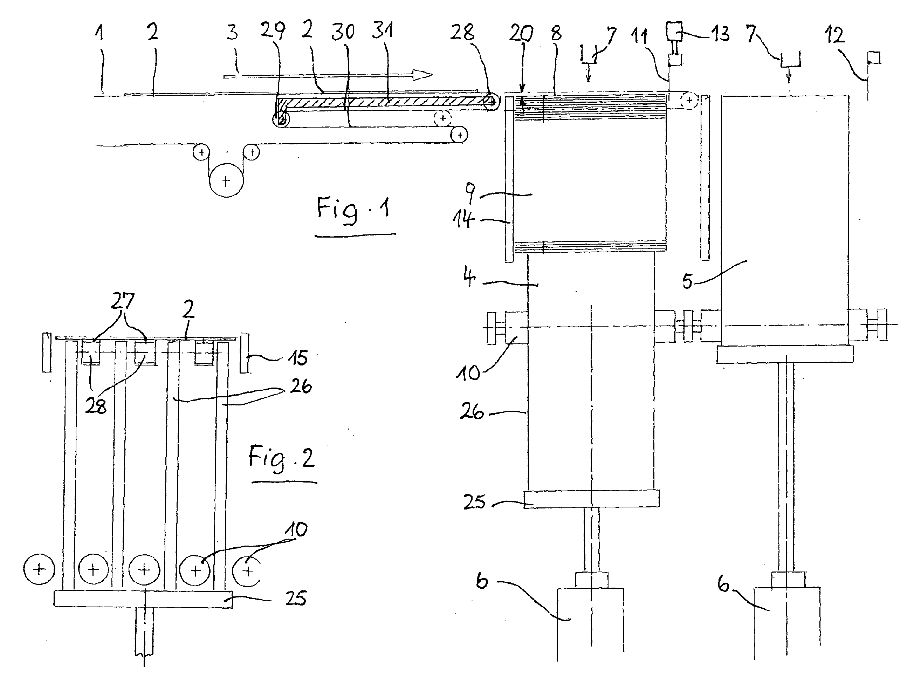

Das Förderband 1 wird von mehreren parallel mit Abstand voneinander angeordneten Förderriemen 27 gebildet. Mindestens die vordere Umlenkrolle 28 wird von einer entsprechenden Mehrzahl von Einzelrollen gebildet, die an zungenartig in Förderrichtung verlaufenden Trägern 31 angeordnet sind, so daß der Platz zwischen den Förderriemen 27, den Einzelrollen 28 und deren Trägern 31 für den Durchtritt der Wände 26 frei bleibt, wie dies in Figur 2 gezeigt ist. Von den vorderen Rollen 28 sind die das Förderband 28 bildenden Riemen zu einer hinteren Umlenkrolle 29 geführt. Anschließend sind sie wieder nach vorne geführt und bilden so eine Umlenkungsschleife 30, die mittels des Trägers 31 in Förderrichtung 3 vor- und zurückgeschoben werden kann. Dadurch können die Rollen 28 und 29 mit dem von ihnen geführten Teil des Förderbands entweder die mit durchgezogenen Linien dargestellte, hintere Stellung einnehmen, in welcher das Förderband 1 an den hinteren Stapeltisch 4 angeschlossen ist, oder sie können die mit strichpunktierten Linien dargestellte, vorgeschobene Stellung einnehmen, in welcher das Förderband 1 an den vorderen Stapeltisch 5 angeschlossen ist.

Infolge der zungenartigen Ausbildung des vorderen Teils des Förderbands 1 kann der hintere Stapeltisch 4, noch während sich das Förderband in der vorgeschobenen, an den Stapeltisch 5 angeschlossenen Stellung befindet, in Stapelstellung hochgefahren werden. Dies ist wichtig für den Vorgang der Umstellung des Förderbands vom vorderen Stapeltisch 5 auf den hinteren Stapeltisch 4. Das Förderband kann erst dann vom vorderen Stapeltisch 4 zurückgezogen werden, wenn die letzte Platte, die auf dem Stapel des Stapeltisches 5 abzulegen ist, das Förderband verlassen hat. In diesem Zeitpunkt befindet sich die folgende Platte bereits über dem Stapel 9 des Stapeltisches 4 oder ist diesem wenigstens nahe. Es wird dann der Stopper 11 in die aktive Stellung abgesenkt, so daß die folgende Platte über dem Stapeltisch 4 festgehalten wird, und das vordere Ende des Förderers wird mit dem Träger 31 und den Umlenkungsrollen 28,29 schlagartig zurückgefahren in die Stellung, in der es an den Stapeltisch 4 angeschlossen ist. Während dieses Zurückfahrens kann sich die vom Stopper 11 festgehaltene Platte auf dem stapel 9 ablegen, ohne daß gegen die Regel der Erfindung verstoßen wird, daß der Höhenabstand 20 zwischen der Stapeloberseite 8 und dem Niveau des Förderers größer als das vorbestimmte Maß ist.

Es ist nicht erforderlich, daß die Tische jeweils schrittweise nach dem Auflegen einer Platte abgesenkt werden. Vielmehr kann der Absenkvorgang auch kontinuierlich erfolgen, wenn die Zufuhrfrequenz - was im allgemeinen vorauszusetzen ist - konstant ist.

Eine Alternative zu der hier beschriebenen Vorrichtung besteht in der Verwendung eines Saugförderers gemäß der gleichzeitig eingereichten Patentanmeldung mit dem anwaltlichen Aktenzeichen SPIA030PEP. Die Kombination des oben beschrieben Verfahrens mit der in der Parallelanmeldung beschrieben Vorrichtung gehört daher mit zum Offenbarungsumfang dieser Anmeldung.

## Patentansprüche

1. Verfahren zum Stapeln von insbesondere stoß- oder biegeempfindlichen Platten mittels eines Plattenstaplers, der einen die Platten (2) im wesentlichen in Richtung ihrer Flächenerstreckung heranführenden Förderer (1) und einen sich daran anschließenden Stapeltisch (4,5) umfaßt, dessen Höhe entsprechend dem Stapelfortschritt im Sinne einer geringen Höhendifferenz zwischen dem Förderer und der Stapeloberseite verstellt wird, **dadurch gekennzeichnet, daß** man die Platten auf die Stapeloberseite (8) aufgleiten läßt, während sie noch von dem Förderer (1) gestützt sind.

2. Verfahren zum Stapeln von insbesondere stoß- oder biegeempfindlichen Platten mittels eines Plattenstaplers, der einen die Platten (2) im wesentlichen in Richtung ihrer Flächenerstreckung heranführenden Förderer (1) und einen sich daran anschließenden Stapeltisch (4,5) umfaßt, dessen Höhe entsprechend dem Stapelfortschritt zur Einhaltung einer vorbestimmten Höhendifferenz zwischen dem Förderer (1) und der Stapeloberseite (8) verstellt wird, **dadurch gekennzeichnet, daß** der Höhenabstand (20) zwischen der Stapeloberseite (8) und dem Ende des Förderers (1), gemessen lotrecht zur Förderrichtung (3), geringer als ein Zwanzigstel der kleineren Flächenabmessung (Breite oder Länge) der Platten (2) ist.

3. Verfahren nach Anspruch 1 oder 2 **dadurch gekennzeichnet, daß** der Winkel, unter dem die Vorderkante der Platten auf die Oberseite (8) des Plattenstapels trifft, geringer als 5 Grad ist.

4. Plattenstapler mit einem die zu stapelnden Platten (2) im wesentlichen in Richtung (3) ihrer Flächenerstreckung heranführenden Förderer (1) und einem daran sich anschließenden, höhenverstellbaren Stapeltisch (4,5), insbesondere zur Durchführung des Verfahrens nach einem der Ansprüche 1 bis 3 **dadurch gekennzeichnet, daß** zwei Stapeltische (4,5) in Richtung des Förderers (1) hintereinander angeordnet und im Wechsel an den Förderer (1) anschließbar sind.

5. Plattenstapler nach Anspruch 4 **dadurch gekennzeichnet, daß** die Stapeltische (4,5) stationär positioniert sind und das Ende des Förderers (1) zum wechselnden Anschluß an die Stapeltische (4,5) beweglich ist.

6. Plattenstapler nach Anspruch 5 **dadurch gekennzeichnet, daß** der Förderer (1) von einer oder mehreren parallel angeordneten Zungen (27,28,31) und der dem Förderer (1) nähere Stapeltisch (4) aus einem oder mehreren jeweils versetzt zu den Zungen des Förderers (1) angeordneten Stützen (26) gebildet ist.

7. Plattenstapler nach einem der Ansprüche 4 bis 6 **dadurch gekennzeichnet, daß** an den Stapeltischen (4,5) ein Sensor (7) zur Feststellung der Höhe der Stapeloberfläche (8) vorgesehen ist.

8. Plattenstapler nach einem der Ansprüche 4 bis 7 **dadurch gekennzeichnet, daß** ein an dem dem Förderer näheren Stapeltisch (4) vorgesehener Stopper (11) ein- und ausschaltbar ist.

9. Verfahren zum Betrieb des Plattenstaplers nach einem der Ansprüche 4 bis 8 **dadurch gekennzeichnet, daß** während des Umstellens des Förderes (1) von dem dem Förderer ferneren Stapeltisch (5) auf den ihm näheren Stapeltisch (4) wenigstens eine Platte auf dem näheren Stapeltisch (4) wenigstens teilweise abgelegt wird.

10. Verfahren nach Anspruch 9 **dadurch gekennzeichnet, daß** der dem näheren Stapeltisch (4) zugeordnete Stopper (11) zu Beginn der Umstellung eingeschaltet wird.

11. Verfahren nach Anspruch 9 oder 10 **dadurch gekennzeichnet, daß** der Abstand der Platten auf dem Förderer (1) nicht kleiner ist als der Abstand der Stapel (9) auf den beiden Stapeltischen (4,5).
